# EUROPEAN PATENT APPLICATION

(11) **EP 4 579 453 A1**
(43) Date of publication of application: **02.07.2025**
(21) Application number: 23870144.5
(22) Date of filing: 31.08.2023
(51) Int. Cl.: G06F 9/455

(54) **CONTAINER CREATION METHOD, SYSTEM, AND NODE**

(30) Priority: 29.09.2022 CN 202211205094
(71) Applicant: Huawei Technologies Co., Ltd., Shenzhen, Guangdong 518129 (CN)
(72) Inventor: LUO, Xianqiang, Shenzhen, Guangdong 518129 (CN); HUANG, Keji, Shenzhen, Guangdong 518129 (CN); WANG, Feng, Shenzhen, Guangdong 518129 (CN); ZHANG, Changjian, Shenzhen, Guangdong 518129 (CN)
(74) Representative: Gill Jennings & Every LLP
(86) International application number: PCT/CN2023/116187
(87) International publication number: WO 2024/066904

(57) **Abstract**

A container creation method, system, and node are provided. In this application, before creating a container, a first node may mount a directory of an image file of the container to a first file system on a remote storage device, and establish an association between the directory of the image file and the first file system. In this case, the image file written by the first node to the directory of the image file is stored in the first file system. The remote storage device is a storage device independent of the first node. When the first node needs to create the container, the first node first obtains the image file from the first file system, and creates the first container based on the image file. The directory of the image file of the container on the first node can be mounted to the first file system on the remote storage device. In this case, the image file can be stored on the remote storage device, so that occupation of local storage space of the first node by the image file can be reduced.

## Description

### CROSS-REFERENCE TO RELATED APPLICATIONS

This application claims priority to Chinese Patent Application No. 202211205094.7, filed with the China National Intellectual Property Administration on September 29, 2022 and entitled "CONTAINER CREATION METHOD, SYSTEM, AND NODE", which is incorporated herein by reference in its entirety.

### TECHNICAL FIELD

This application relates to the field of storage technologies, and in particular, to a container creation method, system, and node.

### BACKGROUND

A container is created based on an image (image) file. The image file provides files needed for running of the container, such as programs, libraries, resources, and configuration parameters.

When a container needs to be created on a node, each node needs to pull an image file from an image repository and write the image file to a directory of the image file in the node. The directory of the image file in the node describes a storage location of the image file in the node. Generally, a storage location indicated by the directory of the image file in the node is in a local storage device of the node. The local storage device of the node is a storage device like a hard disk in the node.

Each node needs to perform an operation of pulling an image file from the image repository once, causing pressure on the image repository. In addition, the image file is directly stored in the local storage device of the node, occupying storage space of the node and further compressing the storage space of the node.

### SUMMARY

This application provides a container creation method, system, and node, to reduce occupation of local storage space of the node in a container creation process.

According to a first aspect, an embodiment of this application provides a container creation method. In the method, before creating a container, a first node can mount a directory of an image file of the container to a first file system on a remote storage device, and establish an association between the directory of the image file and the first file system. In this case, the image file written by the first node to the directory of the image file is stored in the first file system. The remote storage device is a storage device independent of the first node. The remote storage device is a storage device other than the first node. For example, the remote storage device may be connected to the first node through a network.

When the first node needs to create the container, the first node may first obtain the image file from the first file system, and create the container on the first node based on the image file. The first node corresponds to a node 110N in embodiments of this application.

According to the foregoing method, the directory of the image file of the first node can be mounted to the first file system on the remote storage device. In this case, the image file can be stored on the remote storage device, so that occupation of local storage space of the first node by the image file can be reduced.

In a possible implementation, similar to the first node, a second node may also mount the directory of the image file of the container to the first file system. Herein, an example in which the second node is a 1^{st} node that stores the image file in the first file system is used for description. The second node obtains the image file from the image repository, and stores the image file in the first file system. The second node corresponds to a node 110M in embodiments of this application.

According to the foregoing method, the second node pulls the image file from the image repository, and writes the image file to the first file system. In this case, when the first node needs to create the container, the first node does not need to pull the image file from the image repository, and only needs to obtain the image file from the first file system. This reduces a quantity of times that a node on which a container needs to be deployed pulls an image file from the image repository, and implements sharing of the image file between a plurality of nodes.

In a possible implementation, when the second node needs to create the container, the second node obtains the image file from the first file system, and creates the container on the second node based on the image file.

According to the foregoing method, when creating the container, the second node may also obtain the image file from the first file system, thereby further ensuring sharing of the image file between the first node and the second node.

In a possible implementation, when storing the image file in the first file system, the second node stores incremental data in the image file in the first file system, where the incremental data is data in terms of which the image file differs from another image file stored in the first file system.

According to the foregoing method, the second node does not need to store a complete image file in the first file system, and only needs to store some unsaved data in the first file system, thereby reducing occupation of storage space of the remote storage device and reducing an amount of data that needs to be exchanged between the second node and the first file system.

In a possible implementation, when obtaining the image file from the image repository, the second node obtains incremental data in the image file from the image repository, where the incremental data is data in terms of which the image file differs from another image file stored in the first file system.

According to the foregoing method, only the incremental data of the image file needs to be exchanged between the second node and the image repository, so that an amount of data transmitted between the second node and the image repository can be effectively reduced, and an image file pulling speed can be improved.

In a possible implementation, the first node and the second node may be located in different data centers, or the first node and the second node may be located in a same data center.

According to the foregoing method, a deployment manner of the first node and the second node is flexible, and is applicable to different scenarios.

In a possible implementation, for deployment locations of the remote storage device and the first node, the remote storage device and the first node may be located in a same data center. The remote storage device and the first node may alternatively be located in different data centers. Similarly, for deployment locations of the remote storage device and the second node, the remote storage device and the second node may be located in a same data center. The remote storage device and the second node may alternatively be located in different data centers.

According to the foregoing method, a deployment manner of the remote storage device, the first node, and the second node is flexible, and is applicable to different scenarios.

In a possible implementation, when obtaining the image file from the first file system, the first node may offload an interaction operation between the first node and the first file system to a DPU in the first node. In other words, the DPU in the first node may access the first file system. For example, the DPU in the first node obtains the image file from the first file system.

According to the foregoing method, the DPU in the first node may access the first file system, thereby reducing occupation of the processor in the first node by access to the first file system.

In a possible implementation, in addition to the first file system, of the remote storage device, to which the directory of the image file is mounted, the first node may also mount a directory of another file of the container to a file system on another remote storage device. The first node may alternatively mount the directory of the another file of the container to another file system on the remote storage device. In other words, directories of different files of a container may be mounted to different file systems, and the different file systems may be on a same remote storage device or may be on different remote devices. For example, the first node mounts a directory of a root file of the container to a second file system independent of a storage device of the first node. The storage device herein and the remote storage device in which the first file system is located may be a same device, or may be different devices. For another example, the first node mounts a directory of a persistent volume claim PVC of the container to a third file system independent of a storage device of the first node. The storage device herein and the remote storage device in which the first file system is located may be a same device, or may be different devices.

According to the foregoing method, the first node mounts the directory of the another file of the container to the file system on the remote storage device. In this case, the another file of the container can also be stored in the file system, so that occupation of local storage space of the first node is further reduced.

In a possible implementation, when the first node mounts the directory of the another file of the container to the file system on the remote storage device, the DPU in the first node may be configured to access a file system to which the directory of the another file of the container is mounted. For example, the DPU in the first node may access the second file system and the third file system.

According to the foregoing method, the DPU in the first node implements access to the remote storage device, to implement reading and writing of the another file of the container, so that occupation of a processor in the first node by a read and write operation on the another file of the container is further reduced.

In a possible implementation, when the second node obtains the image file from the image repository and stores the image file in the first file system, the second node obtains the compressed image file from the image repository. The second node decompresses the compressed image file, and stores the image file obtained through decompression in the first file system.

According to the foregoing method, the second node can implement decompression of the image file, so that the decompressed image file can be directly read from the first file system for subsequent container creation, thereby improving container creation efficiency.

According to a second aspect, an embodiment of this application provides a container creation system. For beneficial effects, refer to related descriptions of the first aspect. Details are not described herein again. The container creation system includes a first remote storage device and a first node. The first remote storage device is a storage device independent of the first node.

A first file system is deployed on the first remote storage device. When the first node needs to create a container, the first node may mount a directory of an image file of the container to the first file system, obtain the image file from the first file system, and create the container on the first node based on the image file.

In a possible implementation, the system further includes a second node and an image repository.

The image repository stores image files. The second node may mount the directory of the image file of the container to the first file system, or may obtain the image file from the image repository, and store the image file in the first file system.

In a possible implementation, the second node may alternatively obtain the image file from the first file system, and create the container based on the image file.

In a possible implementation, when storing the image file in the first file system, the second node may store incremental data in the image file in the first file system, where the incremental data is data in terms of which the image file differs from another image file stored in the first file system.

In a possible implementation, the image repository may send the incremental data in the image file to the second node, and the second node may obtain the incremental data in the image file. The incremental data is data in terms of which the image file differs from another image file stored in the first file system.

In a possible implementation, the first node and the second node may be located in different data centers, or may be located in a same data center.

In a possible implementation, the first remote storage device and the first node or the second node may be located in a same data center. The first remote storage device and the first node or the second node may alternatively be located in different data centers.

In a possible implementation, the first node may offload an operation of accessing the first file system to a DPU. For example, when the first node obtains the image file from the first file system, the DPU in the first node may obtain the image file from the first file system.

In a possible implementation, the system further includes a second remote storage device and a third remote storage device, and the second remote storage device and the third remote storage device are storage devices independent of the first node. A second file system is deployed on the second remote storage device. A third file system is deployed on the third remote storage device.

The first node may further mount a directory of a root file of the container to the second file system, and mount a directory of a persistent volume claim PVC of the container to the third file system. The remote storage device herein and the remote storage device in which the first file system is located may be a same device, or may be different devices.

In the foregoing descriptions, an example in which the first file system, the second file system, and the third file system are located in different remote storage devices (that is, located in the first remote storage device, the second remote storage device, and the third remote storage device respectively) is used for description. In actual application, some or all of the first file system, the second file system, and the third file system may also be located in a same remote storage device.

In a possible implementation, the DPU in the first node accesses the second file system and the third file system.

In a possible implementation, when the second node obtains the image file from the image repository and stores the image file in the first file system, the second node obtains the compressed image file from the image repository; and after decompressing the compressed image file, stores the image file obtained through decompression in the first file system.

According to a third aspect, this application provides a container creation apparatus. The container creation apparatus has functions of implementing behavior of the first node in the method embodiment according to the first aspect. For beneficial effects, refer to the descriptions of the first aspect. Details are not described herein again. The functions may be implemented by hardware, or may be implemented by executing corresponding software by hardware. The hardware or software includes one or more modules corresponding to the foregoing functions. In a possible design, a structure of the container creation apparatus includes a first mounting module, a first obtaining module, and a first creation module. These modules may perform corresponding functions in the method embodiment according to the first aspect. For details, refer to detailed descriptions in the method embodiment. Details are not described herein again.

According to a fourth aspect, this application provides another container creation apparatus. The container creation apparatus has functions of implementing behavior of the second node in the method embodiment according to the first aspect. For beneficial effects, refer to the descriptions of the first aspect. Details are not described herein again. The functions may be implemented by hardware, or may be implemented by executing corresponding software by hardware. The hardware or software includes one or more modules corresponding to the foregoing functions. In a possible design, a structure of the container creation apparatus includes a second mounting module, a second obtaining module, and a second creation module. These modules may perform corresponding functions in the method according to the first aspect and the possible implementations of the first aspect. For details, refer to detailed descriptions in the method embodiment. Details are not described herein again.

According to a fifth aspect, this application further provides a container creation node. The container creation node may be the first node or the second node in the method embodiment according to the first aspect and the possible implementations of the first aspect. The memory is configured to store computer program instructions. The processor has functions of implementing behavior in the method embodiment according to any one of the first aspect or the possible implementations of the first aspect. For beneficial effects, refer to the descriptions of the first aspect. Details are not described herein again. The container creation node may further include a DPU, and the DPU may be configured to access a first file system, a second file system, or a third file system.

According to a sixth aspect, this application further provides a computer-readable storage medium. The computer-readable storage medium stores instructions, and when the instructions are run on a computer, the computer is enabled to perform the method according to the first aspect and the possible implementations of the first aspect.

According to a seventh aspect, this application further provides a computer chip. The chip is connected to a memory, and the chip is configured to read and execute a software program stored in the memory, to perform the method according to the first aspect and the possible implementations of the first aspect.

According to an eighth aspect, this application further provides a computer program product including instructions. When the computer program product runs on a computer, the computer is enabled to perform the method according to the first aspect and the possible implementations of the first aspect.

Based on the implementations provided in the foregoing aspects, this application may have further combination in this application to provide more implementations.

### BRIEF DESCRIPTION OF DRAWINGS

FIG. 1 is a diagram of an architecture of a system according to this application;
FIG. 2 is a diagram of a structure of a node according to this application;
FIG. 3 is a diagram of a container creation method according to this application;
FIG. 4 is a diagram of an interface for configuring mounting information according to this application;
FIG. 5 is a diagram of a structure of an overlay system according to this application; and
FIG. 6 and FIG. 7 are diagrams of a structure of a container creation apparatus according to this application.

### DESCRIPTION OF EMBODIMENTS

Before the container creation method, system, and node that are provided in embodiments of this application are described, some concepts in this application are described.

### (1) Virtualization technology and container (container)

Virtualization (virtualization) is a resource management technology. Abstraction and conversion are performed on various physical resources of nodes, such as servers, networks, memories, and storage, for presentation by using the virtualization technology.

A container is a type of virtualization technology. A container is an independent running environment simulated by using the virtualization technology. The container is similar to a lightweight sandbox that shields software and hardware outside the container. A container that is run on a node can be essentially regarded as a special process.

### (2) Kubernetes (k8s)

K8s is an open-source container cluster management system. The k8s builds a container scheduling service. The k8s provides a user with an ability of managing a container cluster via the k8s. The k8s may run on a node configured to deploy a container, or may be deployed on a device other than the node.

With the k8s, the user does not need to perform complex configuration. The user only needs to set some necessary parameters on a k8s client, such as an identifier of an image file to be used for the container and a quantity of pods (pod). One pod includes a group of containers that work on a same worker node. In embodiments of this application, the necessary parameters further include mounting information for a container file, to refer to a remote file system to which directories of different files of the container are mounted.

The k8s may automatically select a proper node based on the necessary parameters set by the user to perform specific container cluster scheduling.

It should be noted that, in embodiments of this application, only k8s is used as an example to illustrate container management. In actual application, another system that can be used to implement container management may also be used.

### (3) Three types of files of a container

A container has three types of files: root file (root file system, rootfs), image (image) file, and persistent volume claim (persistent volume claim, PVC). In embodiments of this application, any file in the three different types of the files of the container is allowed to be stored in a file system deployed on a remote storage device (for ease of description, the file system deployed on the remote storage device is referred to as a remote file system).

The following separately describes the three types of files.

### (1) Image file

An image is a read-only template for running of a container. Each image includes a series of layers (layers) and provides files needed for running of the container, such as programs, libraries, resources, and configuration parameters. Because the image has a structure of layers, when the image exists in a form of a file, different layers may correspond to one subfile, and each subfile may further include a plurality of subfiles. Based on such composition of the image, the image file is also referred to as an image file system. An image is a special file system.

An image repository is configured to store a large quantity of images, and is responsible for storing, managing, and distributing the images. When a node needs to create a container, the node pulls a required image from the image repository, creates the container based on the obtained image, and starts an application in the container.

In embodiments of this application, an image file may be pulled out of an image repository by a node, and is stored in a remote file system, to create a container based on the image file in the remote file system. The remote file system may be a shared file system. To be specific, after the image file is stored in the shared file system, another node in a cluster to which the node belongs can obtain the image file from the shared file system, and create a container based on the image file.

The image repository may be deployed in a cluster including a plurality of devices, that is, the cluster provides one or more image files for the node. The image repository may also be deployed on a single device, that is, the device provides one or more image files for the node. A specific deployment manner of the image repository is not limited in embodiments of this application. In the following, for ease of description, the image repository represents a cluster or a single device on which the image repository is deployed.

### (2) Rootfs

When some rootfss exist in a form of a file, the file may include a subfile, and the subfile may also include a subfile inside. The rootfs is also referred to as a root file system.

The rootfs is a working directory of a container and is used to store temporary data, intermediate data, and the like. The temporary data and intermediate data include data that needs to be temporarily stored when a user performs an operation on a container, and some data that needs to be temporarily stored and that is generated during running of an application in the container.

A life cycle of data in the root file is the same as a life cycle of the container. In other words, deregistration of the container indicates deletion of the root file.

In embodiments of this application, after the container is created, the rootfs of the container is stored in the remote file system, and the rootfs of the container is not stored in a local storage device of a node in which the container is located, that is, storage space of the local storage device of the node is not occupied, thereby reducing occupation of storage space of the node by the container.

### (3) PVC

A PVC is a data volume of a container, and the PVC is used to store data that needs to be persistent. A life cycle of data in a PVC is longer than that of a container. In other words, after a container instance disappears, data in the PVC still exists and is not lost. The data in the PVC includes data written to the PCV file when a user performs an operation on the container, and data that is generated during running of an application in the container and that needs to be stored persistently.

Existence of the PVC also prevents some data from being lost when the container is faulty. After the faulty container is migrated, a container that is newly created and that is used to replace the faulty container can still use the PVC of the faulty container.

In embodiments of this application, after the container is created, the PVC may be stored in the remote file system. The remote file system may be a shared file system. To be specific, after the PVC is stored in the shared file system, the another node in the cluster to which the node belongs can obtain the PVC from the shared file system. In this case, when the container is faulty, a new container may be started on a node in the cluster to replace the faulty container, so as to implement fault container migration. The new container may obtain data in the PVC from the shared file system, and may further continue to write data to the PVC.

### (4) Remote storage device and remote file system

In embodiments of this application, the remote storage device is a device having a storage function. It is particularly emphasized herein that the so-called "remote" storage device is a storage device independent of a node. The remote storage device is deployed outside the node, and is connected to the node through a network. Correspondingly, the local storage device is a storage device of the node, for example, a hard disk connected to the node through a system bus.

Data on the remote storage device is organized as files. Each file has a unique file name. Files in a same group are placed under one directory through file grouping, and other files or directories (also referred to as subdirectories) can be further placed under the one directory, forming a "file system" of a tree structure. For any file in the tree structure, the file is located level by level from a root node of the tree structure until the file. The file system means that a data access to a remote storage device is a file-level access.

For ease of description, the file system deployed on the remote storage device is referred to as the remote file system. Embodiments of this application relate to two types of remote file systems. One is a shared remote file system, and the other is an exclusive remote file system.

A shared remote file system can be shared by a plurality of nodes, that is, each node establishes a connection to the shared remote file system, each node can communicate, based on a network protocol, with a remote storage device on which the shared remote file system is deployed, and any node is allowed to write data, such as an image file or a PVC, to the shared remote file system deployed on the remote storage device. Any node is allowed to read data from the shared remote file system deployed on the remote storage device, for example, read a PVC already written by another node, or read data previously written to a PVC by the node, or read data previously written to a PVC by another node.

An exclusive remote file system exclusively belongs to a node (or a container), so that the node (or the container) can write, to the exclusive remote file system, some data that belongs only to the node (or the container).

The node is allowed to write data, such as a rootfs, to the exclusive remote file system deployed on the remote storage device. The node is allowed to read data from the exclusive remote file system deployed on the remote storage device, for example, read data previously written to the rootfs by the node.

To further improve a data read/write speed in the exclusive remote file system, a file in the exclusive remote file system may be stored in a structure of a key-value (key value, KV) pair. The key (key) in the key-value pair is a file name of the file. The value (value) in the key-value pair is the file.

It should be noted that, in embodiments of this application, a storage device on which a remote file system is deployed is referred to as a remote storage device, but this does not mean that the remote file system is deployed on one storage device. In actual application, a remote file system can be deployed on a plurality of storage nodes to form a distributed file system. The plurality of storage nodes are used as a whole, and the whole including the plurality of storage nodes may be understood as a remote storage device. In other words, in embodiments of this application, the remote storage device may be understood as one storage device, or may be understood as a system including a plurality of storage nodes.

### (5) Directory of a rootfs, directory of an image file, and directory of a PVC

A directory of a file of a container indicates a storage location of the file on a node in which the container is located. Corresponding to three types of files of a container, directories of the files of the container are the directory of the rootfs, the directory of the image file, and the directory of the PVC.

The directory of the rootfs describes a storage location of the rootfs on the node. The directory of the image file describes a storage location of the image file on the node. The directory of the PVC describes a storage location of the PVC on the node.

The directory of the rootfs may be understood as a folder or a name of the folder in the node, and the rootfs needs to be stored in the folder. Similarly, the directory of the image file may be understood as a folder or a name of the folder in the node. The directory of the PVC may be understood as a folder or a name of the folder in the node.

The rootfs is used as an example. The node can learn which folder the rootfs is recorded in as long as the node learns of the directory of the rootfs. The directory of the rootfs may be configured by a user, that is, the user may configure a name of a folder used to store the rootfs in the node. The directory of the rootfs may also be recorded in a configuration file of the container. The user only needs to view the configuration file to determine the name of the folder storing the rootfs, and then determine the folder storing the rootfs.

The rootfs is used as an example. In embodiments of this application, mounting (mount) allows a directory of a rootfs to be associated with a remote file system, or it may mean that a directory of a rootfs is mounted to a remote file system. Through mounting, the rootfs under the directory of the rootfs is actually stored in the remote file system. On the node side, when data needs to be written to the rootfs, and when the data needs to be written to the directory of the rootfs on the node side, the node stores the data in the remote file system associated with the directory of the rootfs. When data in the rootfs needs to be displayed, the node can read the data from the remote file system to the local node.

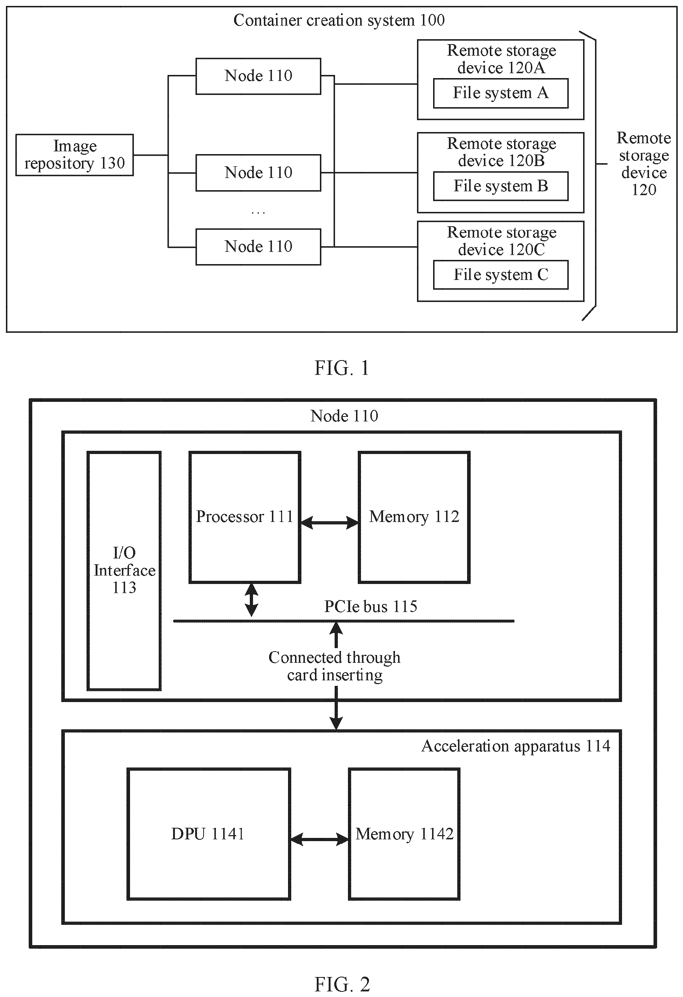

FIG. 1 is a diagram of an architecture of a container creation system according to an embodiment of this application. The container creation system 100 includes at least one node 110 and a remote storage device 120. Optionally, the system 100 further includes an image repository 130.

A quantity of remote storage devices 120 is not limited in embodiments of this application. There may be one or more remote storage devices 120. One or more file systems are deployed on each remote storage device 120. FIG. 1 shows three remote storage devices 120 as an example. The three remote storage devices 120 are respectively a remote storage device 120A, a remote storage device 120B, and a remote storage device 120C.

A file system A is deployed on the remote storage device 120A, and the file system A is an exclusive remote file system. A file system B is deployed on the remote storage device 120B, and the file system B is a shared remote file system. A file system C is deployed on the remote storage device 120C, and the file system C is a shared remote file system.

The node 110 may be a computing device, including but not limited to a personal computer, a server, a mobile phone, a tablet computer, a smart vehicle, or the like. The node 110 may alternatively be a virtual machine.

When the container creation system 100 includes a plurality of nodes 110, deployment locations of the plurality of nodes 110 are not limited in this application. The plurality of nodes 110 may be deployed in a same data center, or may be deployed in different data centers. Similarly, deployment locations of the node 110 and the remote storage device 120 are not limited in this application. The node 110 and the remote storage device 120 may be located in a same data center, or may be located in different data centers.

For any node 110 configured to deploy a container, the node 110 can implement mounting of a directory of a file of the container, and mount a directory of any file of the container to a remote file system. For example, the node 110 may mount a directory of a rootfs of the container to the file system A, mount a directory of an image file of the container to the file system B, and mount a directory of a PVC of the container to the file system C.

The node 110 obtains an image file of the container from the image repository 130, stores the image file in a directory of the image file (actually, stores the image file in a remote file system to which the directory of the image file is mounted), and creates a container based on the image file.

In addition, for nodes 110 on which containers of a same type need to be deployed, directories of image files of the containers on these nodes 110 may be mounted to a same shared remote file system. In this way, only one of the nodes 110 needs to write the image file to the directory of the image file, and another node 110 may obtain the image file from the shared remote file system, and create a container based on the image file. In other words, the another node 110 does not need to repeatedly pull the image file from the image repository 130.

After the container is created, temporary data or intermediate data generated during running of the container may be written to a directory of a rootfs (that is, written to the rootfs under the directory of the rootfs). In other words, the temporary data or the intermediate data generated during running of the container is transmitted to a remote file system to which the directory of the rootfs is mounted. Data that is generated during running of the container and that needs to be persistently stored may be written to a directory of a PVC (that is, written to the PVC under the directory of the PVC). In other words, the node 110 may transmit, to a file system to which the directory of the PVC is mounted, the data written to the directory of the PVC.

For any remote storage device 120, a remote file system is deployed on the remote storage device 120, and storage space is provided for the node 110. A specific form of the remote storage device 120 is not limited in embodiments of this application. The remote storage device 120 may be represented as a system including a plurality of storage nodes 110, or may be represented as a memory.

In embodiments of this application, the node 110 can provide a function of mounting a directory of a file of a container to a remote file system, so that the file of the container can be stored in the remote file system, and occupies storage space of the remote storage device 120. In this way, the container does not occupy a local storage device of the node 110.

In addition, in embodiments of this application, when obtaining the image file from the image repository 130, the node 110 may obtain only incremental data. The so-called incremental data is data in terms of which the image file that has been obtained by the node 110 (the image file that has been obtained by the node 110 is an image file that has been stored by the node 110 in the remote file system) differs from an image file that needs to be obtained currently (that is, differential data). In this way, an amount of data exchanged between the node 110 and the image repository 130 can be reduced, and a transmission rate of an image file can be improved. When storing the image file in the remote file system, the node 110 may alternatively store only the incremental data. The remote file system does not need to store a large amount of duplicate data, so that storage space utilization of the remote file system can be improved, and an amount of data exchanged between the node 110 and the remote file system is also reduced, thereby accelerating interaction efficiency between the node 110 and the remote file system.

Specifically, for the interior of the node 110, the following describes an internal structure of the node 110.

As shown in FIG. 2, the node 110 includes an I/O interface 113, a processor 111, a memory 112, and an acceleration apparatus 114. The I/O interface 113, the processor 111, the memory 112, and the acceleration apparatus 114 may be connected through a system bus. The system bus may be a peripheral component interconnect express (peripheral component interconnect express, PCIe) bus, or may be a compute express link (compute express link, CXL) bus, a universal serial bus (universal serial bus, USB) protocol bus, or another protocol bus.

FIG. 2 shows an example of a connection manner. In FIG. 2, the acceleration apparatus 114 may be directly inserted into a card slot on a mainboard of the node 110, and exchange data with the processor 111 through the PCIe bus 115.

The I/O interface 113 is configured to communicate with a device located outside the node 110. For example, a container creation instruction sent by the external device is received through the I/O interface 113, an image file is obtained from the image repository 130 through the I/O interface 113, and an image file, a rootfs, or a PCV file is sent to the remote storage device 120 through the I/O interface 113.

The processor 111 is an operation core and a control core of the node 110, and may be a central processing unit (central processing unit, CPU), or may be another specific integrated circuit. Alternatively, the processor may be another general-purpose processor, a digital signal processor (digital signal processing, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like.

The memory 112 is usually configured to store various computer program instructions, data, and the like that are running in an operating system of the node 110. To improve an access speed of the processor 111, the memory 112 needs to have a high access speed. The memory 112 usually uses a dynamic random access memory (dynamic random access memory, DRAM) 112 as the memory 112. In addition to the DRAM, the memory 112 may be another random access memory 112, for example, a static random access memory 112 (static random access memory, SRAM). In addition, the memory 112 may alternatively be a read-only memory 112 (read-only memory, ROM). For example, the read-only memory 112 may be a programmable read-only memory (programmable read-only memory, PROM) 112, an erasable programmable read-only memory (erasable programmable read-only memory, EPROM) 112, or the like. The memory 112 may alternatively be a flash medium (FLASH), a hard disk drive (hard disk drive, HDD), a solid state drive (solid state disk, SSD), or the like.

A quantity of memories 112 is not limited in embodiments. The processor 111 is connected to the memory 112 through a double rate (double data rate, DDR) bus or another type of bus. The memory 112 is understood as a memory (internal memory) of the node 110, and the memory is also referred to as a main memory (main memory).

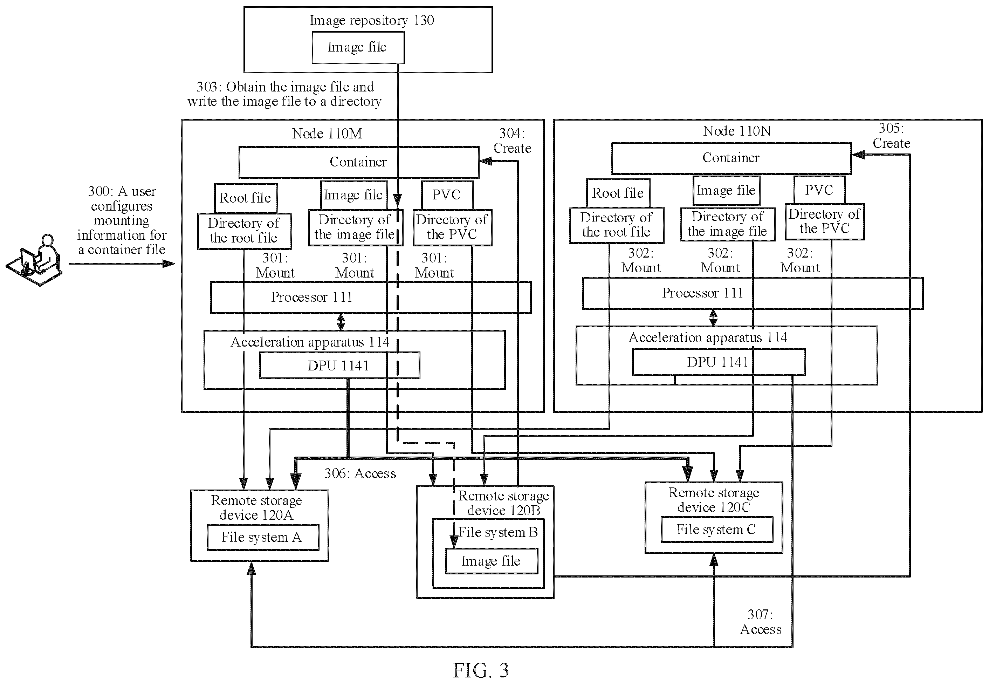

The processor 111 may invoke the computer program instructions in the memory 112 to perform all of the method that needs to be performed by the node 110 in the following embodiment shown in FIG. 3. Alternatively, the processor 111 may invoke the computer program instructions in the memory 112 to perform a part of the method that needs to be performed by the node 110 in the embodiment shown in FIG. 3 below. For example, in embodiments of this application, the processor 111 may complete an operation of mounting a directory of a file of a container to a remote file system and an operation of creating a container. An operation of accessing the remote file system by the node 110 is performed by the acceleration apparatus 114. The operation of accessing the remote file system means reading data from or writing data to the remote file system.

The acceleration apparatus 114 includes a data processing unit (data process unit, DPU) 1141. Optionally, the acceleration apparatus 114 further includes a memory 1142, a power supply circuit, and the like. The DPU 1141 is connected to the memory 1142 through a system bus. The system bus may be a PCIe-based line, or may be a bus of a CXL, a bus of a protocol USB, or a bus of another protocol.

The DPU 1141 is a main operation unit of the acceleration apparatus 114, and is a core unit of the acceleration apparatus 114. The DPU 1141 undertakes a main function of the acceleration apparatus 114. For example, some functions of the node 110 may be offloaded to the DPU 1141, the DPU 1141 processes data, and executes a task assigned by the node 110 to the acceleration apparatus 114. The DPU 1141 invokes the computer program instructions in the memory 1142 to perform a part of the method that needs to be performed by the node 110 in the embodiment shown in FIG. 3 below. The DPU 1141 may access the remote file system, read data from the remote file system, or write data to the remote file system. The data can be the data in the rootfs, the image file, or the PVC.

The following describes a container creation method provided in an embodiment of this application with reference to FIG. 3. In the embodiment shown in FIG. 3, containers are created on a node 110M and a node 110N. FIG. 3 merely describes an example of a process of creating a container on each of the node 110M and the node 110N. A manner of creating a plurality of containers on the node 110 is similar to a method of creating one container on the node 110. Details are not described herein again. The container creation method shown in FIG. 3 includes three parts. A first part is a process of mounting a directory of a file of a container to a remote file system. Refer to step 300 to step 302. A second part is a container creation process. Refer to step 303 to step 305. A third part is a process of writing and reading the file of the container in a container running process. Refer to step 306 and step 307.

Step 300: A user configures mounting information for a container file, and triggers a mounting procedure of the container file. The mounting information for the container file describes association relationships between the three types of files of the container and the remote file system.

The following describes three manners in which the user configures the mounting information for the container file.

Manner 1: The mounting information for the container file is configured by using a container cluster management system.

K8s is used as an example. The user can manage containers by using the k8s. When the user needs to deploy the container, the user can configure some necessary parameters on a k8s-side client deployed on the user side. For example, the user may configure an image file that the container needs. When configuring the image file on the k8s, the user may enter an identifier that can uniquely identify the image file. The identifier of the image file may be configured by the image repository 130 for the image file, or may be set by an image file designer for the image file when the image file is stored in the image repository 130. For another example, the user may configure a quantity of pods. A quantity of containers in each pod is pre-configured.

For another example, the user may configure the mounting information for the container file on the k8s. For any one of a rootfs, an image file, and a PVC of the container, the user may configure a directory of the file, a type of a remote file system to which the directory of the file is mounted, and a name of the remote file system to which the directory of the file is mounted.

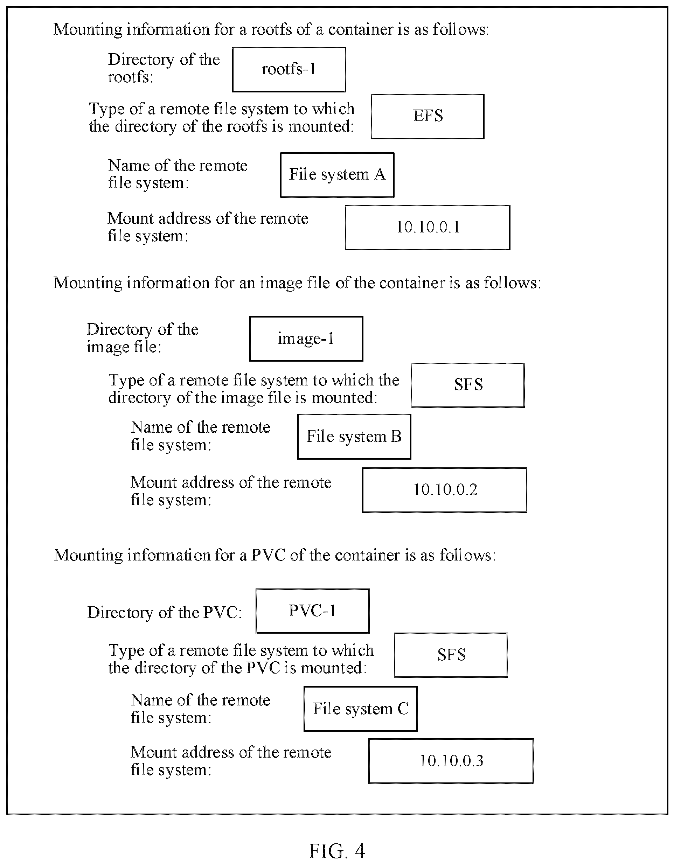

FIG. 4 is a diagram of an interface that is for configuring mounting information for a container file and that is provided by k8s for a user. In FIG. 4, an interface for mounting information for a rootfs of a container is provided. The mounting information for the rootfs of the container includes a directory of the rootfs, a type of a remote file system to which the directory of the rootfs is mounted, and a name of the remote file system to which the directory of the rootfs is mounted. Optionally, the mounting information may further include a mount address of the remote file system. The mount address of the remote file system is an address of the remote storage device 120, and the mount address is used for data transmission between the node 110 and the remote file system through a network. The mount address may be an internet protocol (internet protocol, IP) address, or may be a media access control (media access control, MAC) address. A specific type of the mount address is not limited in embodiments of this application. Any address that can implement communication with the remote storage address in which the remote file system is located is applied to embodiments of this application.

An interface for mounting information for an image file of a container is provided, including a directory of the image file, a type of a remote file system to which the directory of the image file is mounted, and a name of the remote file system to which the directory of the image file is mounted. Optionally, the mounting information may further include a mount address of the remote file system. The mount address of the remote file system is used for data transmission between the node 110 and the remote file system.

An interface for mounting information for a PVC of a container is provided, including a directory of the PVC, a type of a remote file system to which the directory of the PVC is mounted, and a name of the remote file system to which the directory of the PVC is mounted. Optionally, the mounting information may further include a mount address of the remote file system. The mount address of the remote file system is used for data transmission between the node 110 and the remote file system.

Embodiments of this application relate to two different types of remote file systems. To distinguish from an existing network file system (network file system, NFS), corresponding type names may be pre-designed for the two different types of remote file systems. For example, a type name of the shared remote file system is designed as SFS and a type name of the exclusiveremote file system is designed as EFS. The type names of the two different types of remote file systems can be identified by the node 110. In actual application, to enable the node 110 to identify the two different types of remote file systems, a container storage interface (container storage interface, CSI) plug-in of the node 110 may be updated, so that the node 110 has a function of identifying the type names of the two different types of remote file systems, and can automatically execute a mounting instruction carrying a type name of any one of the remote file systems.

In the mounting information for the rootfs of the container in FIG. 4, the directory of the rootfs is rootfs-1, indicating that a name of a folder storing the rootfs is rootfs-1; the type of the remote file system to which the directory of the rootfs is mounted is EFS, indicating that the directory of the rootfs needs to be mounted to an exclusive remote file system; and the name of the remote file system to which the directory of the rootfs is mounted is file system A, indicating that a file name of the exclusive remote file system is file system A. The mount address of the remote file system is 10.10.0.1, indicating that the mount address of the remote file system is 10.10.0.1. The node 110 can read data in the rootfs from the remote file system or write data to the remote file system through the network based on the mount address.

In the mounting information for the image file of the container, the directory of the image file is image-1, indicating that a name of a folder storing the image file is image-1; the type of the remote file system to which the directory of the image file is mounted is SFS, indicating that the directory of the image file needs to be mounted to a shared remote file system; and the name of the remote file system to which the directory of the image file is mounted is file system B, indicating that a file name of the shared remote file system is file system B. The mount address of the remote file system is 10.10.0.2, indicating that the mount address of the remote file system is 10.10.0.2. The node 110 can read the image file from the remote file system or write the image file to the remote file system through the network based on the mount address.

In the mounting information for the PVC of the container, the directory of the PVC is PVC-1, indicating that a name of a folder storing the PVC is PVC-1; the type of the remote file system to which the directory of the image file is mounted is SFS, indicating that the directory of the image file needs to be mounted to a shared remote file system; and the name of the remote file system to which the directory of the image file is mounted is file system C, indicating that a file name of the shared remote file system is file system C. The mount address of the remote file system is 10.10.0.3, indicating that the mount address of the remote file system is 10.10.0.3. The node 110 can read data in the PVC from the remote file system or write data in the PVC to the remote file system through the network based on the mount address.

After the user completes the configuration on the k8s client, the k8s may orchestrate a plurality of containers based on the configuration of the user, and determine specific nodes 110 on which pods are to be deployed and a quantity of pods that are to be deployed on each node 110. The k8s sends a container mounting request to the determined node 110, where the container mounting request carries mounting information for a container file, to request the node 110 to complete mounting of a directory of the file of the container to a remote file system, and trigger a mounting procedure of the container file (that is, step 301 to step 303). For example, the k8s may deliver a container mounting request to the node 110M and the node 110N, and the container mounting request may carry the configuration information of the container file configured in FIG. 4.

In addition, the k8s may further send an image pulling request to a part of the determined nodes 110. The image pulling request is used to request the node 110 to pull an image file from the image repository 130, and the image pulling request carries an identifier of the image file. For example, the k8s determines that pods are deployed on the node 110M and the node 110N. The k8s does not need to separately send the image pulling request to the node 110M and the node 110N, and only needs to send the image pulling request to the node 110M or the node 110N.

Certainly, in actual application, the k8s side may provide the user with a function of configuring mounting information for three types of files of a container, as shown in FIG. 4, or may provide the user with a function of configuring mounting information for only one or two types of files.

Manner 2: The mounting information for the container file is configured by updating a configuration file of the container.

For the node 110, the node 110 stores the configuration file of the container. The configuration file of the container records some parameters for creating the container. The configuration file of the container may include mounting information for one or more files of the container. Mounting information that is in the configuration file of the container and that is for any one of the files is preset information. The preset information is allowed to be changed.

For example, the configuration file of the container includes preset mounting information for an image file of the container, preset mounting information for a rootfs of the container, and mounting information for an image file of the container.

The preset mounting information for the rootfs of the container includes a preset directory of the rootfs, a preset type of a remote file system to which the directory of the rootfs is mounted, and a preset name of the remote file system to which the directory of the rootfs is mounted. Optionally, the mounting information may further include a preset mount address of the remote file system.

The user can modify the mounting information for the rootfs of the container, such as the directory of the rootfs, the type of the remote file system to which the directory of the rootfs is mounted, and the name of the remote file system to which the directory of the rootfs is mounted.

For example, the user can modify the directory of the rootfs to rootfs-A, modify, to EFS, the type of the remote file system to which the directory of the rootfs is mounted, and modify, to file system A, the name of the remote file system to which the directory of the rootfs is mounted.

The preset mounting information for the image file of the container includes a preset directory of the image file, a preset type of a remote file system to which the directory of the image file is mounted, and a preset name of the remote file system to which the directory of the image file is mounted. Optionally, the mounting information may further include a mount address of the remote file system.

For example, the user can modify the directory of the image file to image-B, modify, to SFS, the type of the remote file system to which the directory of the image file is mounted, and modify, to file system B, the name of the remote file system to which the directory of the image file is mounted.

In this way, when the node 110 needs to create a container subsequently, the node 110 invokes the modified mounting information, and mounts the directory of the file of the container to a specified file system.

Manner 3: A mounting instruction is directly delivered to the node 110, where the mounting instruction carries mounting information for the container file.

The user directly delivers mounting instructions to the node 110M and the node 110N. For example, the user may directly operate the node 110, and enter the mounting instructions through input/output devices externally connected to the node 110M and the node 110N.

A format of the mount instruction is as follows: mount -t Mount address of the remote file system Type of the remote file system Name of the remote file system Directory of the file.

For example, the user enters the following three mounting instructions:
Mounting instruction 1: mount -t 10.10.0.1 EFS file system A rootfs-A.
Mounting instruction 2: mount -t 10.10.0.2 SFS file system B image-B.
Mounting instruction 3: mount -t 10.10.0.3 SFS file system C PVC-C.

The mounting command 1 indicates a folder named rootfs-A to be mounted to an exclusive remote file system whose name is file system A and whose mount address is 10.10.0.1. The mounting command 2 indicates a folder named image-B to be mounted to a shared remote file system whose name is file system B and whose mount address is 10.10.0.2. The mounting command 3 indicates a folder named PVC-B to be mounted to a shared remote file system whose name is file system C and whose mount address is 10.10.0.3.

After the user enters the three mounting instructions, a mounting procedure of the container file is triggered (that is, step 301 and step 302).

The foregoing manners are merely examples for description. In actual application, when configuring the mounting information for the container file, the user may use any one of the foregoing manners, or may use two or more of the foregoing manners. For example, the user may configure the mounting information for the PVC of the container in the container cluster management system, and configure the mounting information for the roofs and the mounting information for the image file of the container by modifying the configuration information of the container on the node 110. Certainly, in embodiments of this application, the mounting information for the container may alternatively be configured in a manner other than the foregoing three manners.

The following uses an example in which the node 110M and the node 110N create containers for description.

Step 301: The node 110M mounts a directory of a rootfs of a container to the file system A, mounts a directory of an image file of the container to the file system B, and mounts a directory of a PVC of the container to the file system C.

For the manner 1 mentioned in step 300, after the node 110M receives a container mounting request, the node 110M (for example, a processor 111 in the node 110M) may automatically execute a mounting instruction. The mounting instruction automatically executed by the node 110M is an unmounting instruction like the foregoing mounting instruction 1, mounting instruction 2, and mounting instruction 3.

For the manner 2 mentioned in step 300, the node 110M obtains mounting information that is for a file of a container and that is modified by a user, and the node 110M (for example, the processor 111 in the node 110M) may automatically execute a mounting instruction. The mounting instruction automatically executed by the node 110M is an unmounting instruction like the foregoing mounting instruction 1, mounting instruction 2, and mounting instruction 3.

For the manner 3 mentioned in step 300, after the node 110M detects an unmounting instruction entered by the user, the node 110M (for example, the processor 111 in the node 110M) may automatically execute a mounting instruction. The mounting instruction automatically executed by the node 110M is the foregoing mounting instruction 1, the mounting instruction 2, and the mounting instruction 3.

The node 110M executes these mounting instructions, so that the node 110M establishes a connection to the remote storage device 120 on which the remote file system is deployed (the node 110M communicates with the remote storage device 120, to notify the remote storage device 120 that some data is to be written to the remote storage device 120 subsequently), and establishes an association relationship between the directory of the file of the container and the remote file system. In this case, the file in the directory of the file of the container can be written to the remote file system associated with the node 110M.

The node 110M establishes, by executing the mounting instruction 1, a connection between the node 110M and a remote storage system 120A on which the file system A is deployed, mounts the directory of the rootfs of the container to the file system A, and establishes an association relationship between the directory of the rootfs of the container and the file system A.

The node 110M establishes, by executing the mounting instruction 2, a connection between the node 110M and a remote storage system 120B on which the file system B is deployed, mounts the directory of the image file of the container to the file system B, and establishes an association relationship between the directory of the image file of the container and the file system B.

The node 110M establishes, by executing the mounting instruction 3, a connection between the node 110M and a remote storage system 120C on which the file system C is deployed, mounts the directory of the PVC of the container to the file system C, and establishes an association relationship between the directory of the PVC of the container and the file system C.

Step 302: The node 110N mounts a directory of a rootfs of a container to the file system A, mounts a directory of an image file of the container to the file system B, and mounts a directory of a PVC of the container to the file system C. A manner in which the node 110N performs step 302 is similar to a manner in which the node 110M performs step 301. For details, refer to the foregoing content. Details are not described herein again.

Step 303: The node 110M obtains the image file from the image repository 130, and writes the image file to the directory of the image file.

For the manner 1 mentioned in step 300, the node 110M (for example, the processor 111 in the node 110M) can receive an image pulling request sent by the k8s. After receiving the image pulling request, the node 110M (for example, the processor 111 in the node 110M) pulls the image file from the image repository 130 based on an identifier of the image file carried in the image pulling request. The node 110M (for example, the processor 111 in the node 110M or an acceleration apparatus 114 in the node 110M) writes the image file to the directory of the image file.

The essence of the process in which the node 110M writes the image file to the directory of the image file is a process in which the node 110M writes the image file to the file system B to which the directory of the image file is mounted.

A client of the file system B may be deployed on the node 110M (for example, the processor 111 in the node 110M), and the client of the file system B may run on the processor 111 in the node 110M. In this way, when the node 110M writes the image file to the directory of the image file, the client of the file system B may communicate with the remote storage device 120B, transmit the image file to the remote storage device 120B, and store the image file in the file system B.

To reduce occupation of the processor 111 of the node 110M, the node 110M may offload a function of accessing the remote file system to the acceleration apparatus 114, that is, the acceleration apparatus 114 communicates with each remote storage device 120 to access the remote file system.

In step 303, after the processor 111 of the node 110M obtains the image file from the image repository 130, the acceleration apparatus 114 may write the image file to the directory of the image file. The acceleration apparatus 114 may write the image file to the file system B to which the directory of the image file is mounted.

In the scenario in which the function of accessing the remote file system is offloaded to the acceleration apparatus 114, the client of the file system B is deployed on the acceleration apparatus 114, and the client of the file system B may run on a DPU 1141 of the acceleration apparatus 114. In this way, when the node 110M writes the image file to the directory of the image file, the client of the file system B may communicate with the remote storage device 120B, transmit the image file to the remote storage device 120B, and store the image file in the file system B.

When pulling an image file from the image repository 130, the node 110M may obtain only incremental data of the image file. The incremental data is differential data between an image file that needs to be pulled currently and an image file that has been stored in the node 110M. In embodiments of this application, the directory of the image file of the node 110M is mounted to the file system B, indicating that the image file stored in the node 110M is essentially stored in the file system B. Therefore, the image file stored in the node 110M refers to the image file stored in the file system B. In this case, the incremental data is differential data between the image file that needs to be pulled currently and the image file that has been stored in the file system B. A granularity of the incremental data is not limited in embodiments of this application. The image file is in a structure of layers, that is, the image file includes a plurality of layers, and each layer of data may be divided into a plurality of pieces of block data. In this case, the incremental data may be one or more layers of the image file, or may be one or more pieces of block data in the image file. The plurality of pieces of block data may be a plurality of pieces of block data in one layer of data in the image file, or may be a plurality of pieces of block data in different layers of data in the image file.

A manner in which the node 110M obtains only the incremental data of the image file from the image repository 130 is not limited in embodiments of this application. For example, the node 110M may record an identifier of the image file that has been stored in the file system B, or the node 110M may interact with the file system B to obtain the identifier of the image file that has been stored in the file system B. From a perspective of the device, the image file stored in the file system B refers to an image file stored in the remote storage device 120B.

When pulling the image file from the image repository 130, the node 110M may send, to the image repository 130, the identifier of the stored image file and an identifier of the image file that needs to be pulled currently. The image repository 130 determines, based on the identifier of the stored image file and the identifier of the image file that needs to be pulled currently, incremental data of the image file that needs to be pulled currently. The image repository 130 sends the incremental data to the node 110M.

Similarly, the node 110M writes the image file to the directory of the image file, that is, the node 110M writes the image file to the file system B, and the node 110M may alternatively store only the incremental data of the image file in the file system B. In this scenario, there are two possible cases:
Case 1: The node 110M pulls the incremental data of the image file from the image repository 130.

In this case, the node 110M directly writes the incremental data of the image file to the directory of the image file, that is, directly stores the incremental data of the image file in the file system B.

Case 2: The node 110M pulls the image file from the image repository 130.

In this case, the node 110M pulls the entire image file from the image repository 130. The node 110M may view the file system B (for example, the node 110M may invoke an image file in a directory of the image file associated with the file system B), and determine differential data between the image file stored in the file system B and a currently pulled image file, that is, determine incremental data of the image file and write the incremental data of the image file to the directory of the image file. The node 110M may also directly write the image file to the directory of the image file, that is, send the image file to the file system B. After receiving the image file, the remote storage device 120B may determine the differential data between the image file stored in the file system B and the currently received image file, that is, determine incremental data of the image file. The remote storage device 120B stores only the incremental data of the image file. A manner in which the node 110M stores the incremental data of the image file in the file system B is merely an example. Embodiments of this application do not limit a manner in which the node 110M stores the incremental data of the image file in the file system B.

The following uses an example in which the incremental data is block data to describe a manner in which the node 110M pulls incremental data of an image file from the image repository 130 and stores the incremental data of the image file in the file system. The manner includes the following steps:
Step 1: The node 110M sends an image request to the image repository 130, where the image request carries an identifier of an image file that needs to be pulled.

Step 2: After receiving the image request, the image repository 130 determines, based on the identifier of the image file, the image file that needs to be pulled, and sends digest information of the image file to the node 110M. The digest information indicates content in the image file. The content in the image file includes but is not limited to: layers included in the image file and fingerprint information of each layer.

Fingerprint information of each layer may be understood as an identifier of data, and data included in the layer can be determined based on the fingerprint information. In embodiments of this application, fingerprint information of each layer may be at a granularity of block data, that is, each block data in the layer corresponds to one piece of fingerprint information of the block data. The fingerprint information of each layer includes fingerprint information of each block data in the layer.

For example, if a layer of data in the image file has 1 megabyte (MByte, MB), the layer of data is first divided into 1024 pieces of block data of 1 kilobyte (kilobyte, KB) in size. The fingerprint information is calculated for each block data by using a hash algorithm. Herein, a division manner of each layer of data is merely an example, and a division manner of block data is not limited in embodiments of this application. A manner of calculating the fingerprint information herein is merely an example, and a manner of calculating the fingerprint information is also not limited in embodiments of this application.

Step 3: After receiving the digest information of the image, the node 110M sends the digest information to the remote storage device 120B.

Step 4: After receiving the digest information, the remote storage device 120B may determine, based on the fingerprint information in the digest information, block data corresponding to specific fingerprint information is already stored in the file system B, and block data corresponding to specific fingerprint information is not stored in the file system B. The block data that is not stored in the file system B is the incremental data of the image file.

Step 5: The remote storage device 120B generates incremental data indication information, where the incremental data indication information indicates the incremental data of the image file.

A manner in which the incremental data indication information indicates the incremental data of the image file is not limited in embodiments of this application. For example, the incremental data indication information includes fingerprint information of block data that is not stored in the file system B. For another example, the incremental data indication information indicates whether each block data in the image file has been stored in the remote storage device 120B.

Step 6: The remote storage device 120B sends the incremental data indication information to the node 110M, and then the node 110M sends the incremental data indication information to the image repository 130.

Step 7: After receiving the incremental data indication information, the image repository 130 may send the image file to the node 110M.

Herein, block data that is in the image file sent by the image repository 130 and that has been stored in the file system B may be replaced with fingerprint information of the block data, and block data that is not stored in the file system B is the block data itself.

Step 8: The node 110M writes the image file to a directory of the image file, that is, the node 110M sends the image file to the remote storage device 120B.

Step 9: After receiving the image file, the remote storage device 120B stores the image file.

In the foregoing descriptions, an example in which the k8s delivers the image pulling request to the node 110M to enable the node 110M to perform step 303 is used for description. In actual application, the user may also directly enter, on the node 110M, an instruction indicates to pull the image file, so that the node 110M can perform step 303 under trigger of the user. A manner of triggering the node 110M to perform step 303 is not limited in embodiments of this application. Any manner in which the node 110M is enabled to perform step 303 is applicable to embodiments of this application.

Step 304: The node 110M (for example, the processor 111 in the node 110M) creates a container on the node 110M based on the image file.

Case 1: After the node 110M writes the image file to the directory of the image file, the k8s may send a container creation request to the node 110M, to request the node 110M to create a container. The container creation request carries a quantity of pods that need to be deployed on the node 110M. After receiving the container creation request, the node 110M may automatically execute a container creation instruction (for example, a docker run instruction) and may load data required in the image file to the node 110M, and create a container through operations such as running a program in the image file, invoking a library and a resource in the image file, and completing configuration of a configuration parameter in the image file.

Case 2: After the node 110M writes the image file to the directory of the image file, the user may enter a container creation instruction in the node 110M, to directly indicate the node 110M to create the container. After detecting the container creation instruction, the node 110M may execute the container creation instruction, load data required in the image file to the node 110M, and create a container through operations such as running a program in the image file, invoking a library and a resource in the image file, and completing configuration of a configuration parameter in the image file.

Step 301 is performed only on the node 110 and implements only the general mounting of the directory of the file of the container to the remote file system. The directory of the file of the container in step 301 is not specific to a particular container. In a process of creating a container in step 304, a directory of a file of a container that is configured in step 301 needs to be associated with the created container, so that the directory of the file of the container in step 301 is a directory of a file of the created container.

The node 110M configures a directory of a file of the container for the created container in the process of creating the container. For example, the node 110M associates, as a directory rootfs-1 of a rootfs file, a directory that is of a rootfs of a container and that is named rootfs-A in an unmounting instruction 1; the node 110M associates, as a directory image-1 of an image file, a directory that is of an image file of the container and that is named image-B in an unmounting instruction 2; and the node 110M associates, as a directory PVC-1 of an image file, a directory that is of an image file of the container and that is named PVC-B in an unmounting instruction 3.

In the foregoing two cases, a process of loading the image file locally may be performed by the processor 111 in the node 110M, or may be performed by the acceleration apparatus 114 in the node 110M, to reduce occupation of the processor 111. When loading the image file, the processor 111 or the acceleration apparatus 114 (for example, the DPU 1141 in the acceleration apparatus 114) communicates with the remote storage device 120B to obtain the image file.

Usually, to save storage space, the image file in the image repository 130 is a compressed image file. In other words, the image file obtained by the node 110M is a compressed image file. Before writing the image file to the directory of the image file, the node 110M (for example, the processor 111 or the acceleration apparatus 114 in the node 110M) decompresses the compressed image file, and after decompression, writes the decompressed image file to the directory of the image file, that is, the image file obtained through decompression is stored in the remote file system to which the directory of the image file is mounted.

To further reduce consumption of the processor 111 or the acceleration apparatus 114, a decompression operation may also be performed by the remote storage device 120B. That is, when the processor 111 or the acceleration apparatus 114 in the node 110M writes the compressed image file to the file system B to which the directory of the image file is mounted, the remote storage device 120B may decompress the compressed image file.

In this way, when the node 110M needs to create a container, the processor 111 or the acceleration apparatus 114 (for example, the DPU 1141 in the acceleration apparatus 114) of the node 110M loads required data in the decompressed image file to the node 110M, and creates the container based on the loaded data.

When the node 110M creates the container, the node 110M may create, by using an overlay (overlay) system, a container that needs to be deployed on the node 110M.

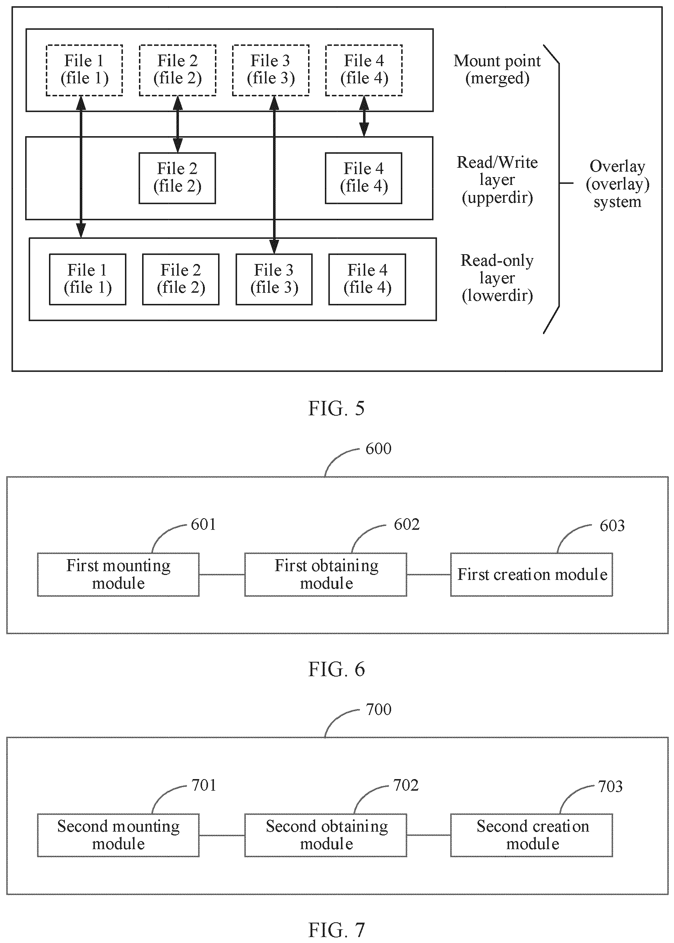

The following first describes the overlay system. The overlay system is a special file system, and is a multi-layer file system. For a result of layers of the overlay system, refer to FIG. 5. The right part in FIG. 5 shows three layers of directories in the overlay system. The three layers of directories are respectively a mount point (merged), a read/write layer (upperdir), and a read-only layer (lowerdir).
upperdir and lowerdir can be mounted to a same file system or different file systems. Data in the merged directory is combined with data in the two directories of upperdir and lowerdir. A file or directory in the upperdir layer overwrites a file or directory having the same name in the lowerdir layer. For example, a file 2 in the merged directory is a file 2 in the upperdir directory, not that in the lowerdir directory.

Externally, the three directories are collectively presented as the overlay file system. When the three directories are mounted to the overlay file system in a mounting manner, a mount point that is in the foreground is the merged directory. In other words, upperdir and lowerdir are in the background. When data is operated on the mount point, data is operated in upperdir and lowerdir. The common operations are as follows:
1. A read operation is to read data. For example, when data of a file 1 is read, a file 1 is read from lowerdir. For another example, when the file 2 is read, the file 1 is read from upperdir.
2. A write operation is to write data. For example, when data is written to the file 1, the file 1 is first read from lowerdir, data in the file 1 is modified, and then a modified file 1 is stored in upperdir to create the file 1.

For a container, a file required by the container may be stored in the overlay system. For example, an image file can be stored in lowerdir to ensure that the image file is not modified. Modification of images and creation of temporary files (roofs) in the container are stored at the upperdir layer. In embodiments of this application, lowerdir corresponds to a directory of an image of the container. In other words, lowerdir is associated with the directory of the image file, and the directory of the image file is mounted to a remote file system. Therefore, lowerdir is associated with the remote file system essentially. upperdir corresponds to a directory of a rootfs of the container. In other words, upperdir is associated with the directory of the rootfs, and the directory of the rootfs is mounted to a remote file system. Therefore, upperdir is associated with the remote file system essentially.

Step 305: The node 110N obtains the image file, and creates a container on the node 110N. A manner in which the node 110N performs step 305 is similar to a manner in which the node 110M performs step 304.

It should be noted that, the node 110M writes the image file to the file system B to which the directory of the image file is mounted, and the directory of the image file of the container in the node 110N is also mounted to the file system B. In this case, that the node 110M writes the image file to the file system B is equivalent to writing the image file to the directory of the image file of the container in the node 110N. In addition, the file system B is a shared remote file system, and therefore the node 110N can directly load the image file from the file system B to the node 110N, and create a container through operations such as running a program in the image file, invoking a library and a resource in the image file, and completing configuration of a configuration parameter in the image file.

In embodiments of this application, a plurality of nodes 110 are allowed to mount a directory of a type of a file of a container to a same shared file system. In this way, when a container on one of the plurality of nodes 110 writes data in the file to a directory of the file, the data is written to the shared file system, and another node 110 of the plurality of nodes 110 can obtain the data in the file from the shared file system. For example, all nodes 110, in a plurality of nodes 110, on which containers of a same type need to be deployed mount directories of image files of the containers to a same shared file system. In this case, a remote storage device 120 in which the shared file system is located configures, for the nodes 110 on which the containers of the same type are deployed, a same segment of storage space used to store the image files. In other words, after an image file obtained by any node 110 in the nodes 110 on which the containers of the same type are deployed is written to a directory of the image file, the image file is written to the storage space. In this case, any node 110 in the nodes 110 on which the containers of the same type are deployed can also obtain data in the storage space. According to this principle, for an image file, as long as one node 110 in the nodes 110 on which the containers of the same type are deployed writes the image file to the storage space, another node 110 in the nodes 110 on which the containers of the same type are deployed may read the image file in the storage space by viewing data in a directory of the image file of the another node 110.

There are many manners in which the remote storage device 120 in which the shared file system is located configures, for the nodes 110 on which the containers of the same type are deployed, a same segment of storage space used to store the image file. For example, when the k8s determines specific nodes 110 on which containers of a same type need to be deployed, the k8s may send an indication message to the remote storage device 120. The indication message notifies the remote storage device 120 of a node 110 to which a same segment of image file storage space needs to be allocated (the indication message may carry an identifier of the node 110). The remote storage device 120 is a remote storage device 120 in which a shared file system on which a directory of an image file of a container in the node 110 is mounted is located. Subsequently, when the node 110 communicates with the remote storage device 120 by executing a mounting command for the image file, the node 110 may notify the remote storage device 120 of the identifier of the node 110. In this way, the remote storage device 120 may determine, based on an obtained identifier of each node 110, a node 110 to which a same segment of image file storage space needs to be allocated, and allocate the same segment of storage space to the node 110. For another example, when these nodes 110 communicate with the remote storage device 120 by executing a mounting command for an image file, these nodes 110 may notify the remote storage device 120 of an identifier of the image file. In this way, the remote storage device 120 may determine, based on the identifier of the image file sent by each node 110, specific nodes 110 of which directories of container image files need to store the same image file, and the nodes 110 that send the same image file identifier are nodes 110 to which a same segment of image file storage space needs to be allocated. Only two manners are listed herein. This application is also applicable to another manner in which the remote storage device 120 in which the shared file system is located can configure, for the node 110 on which a same type of container is deployed, a same segment of storage space used to store data in a file of the container.

In this case, the container in the node 110M and the container in the node 110N are created. After the container is created, the container runs an application deployed on the container. A user may also perform an operation in the container by using a client deployed on a user side, for example, the user may view data, modify data, and save data in the container. The client herein may be understood as client software configured to operate the container or a client device configured to operate the container (that is, a client having a hardware form).

Step 306: After the container in the node 110M is created, the node 110M writes data such as temporary data and intermediate data in a container running process to the directory of the rootfs, and writes data that needs to be persisted and that is generated in the container running process to a directory of a PCV file.

In the container running process, an application deployed on the container may perform some services, such as a database service, a voice call service, and a video encoding and decoding service. Some data is generated when the application performs these services. The application can write, to the directory of the rootfs based on existing configuration, temporary data or intermediate data that is in the some data and that does not need to be stored for a long time (that is, data in the rootfs), and write, to the directory of the PCV file, data that is in the some data and that needs to be persisted.

When detecting an action that the application needs to write data to the directory of the rootfs, the processor 111 in the node 110M writes the data to the file system A to which the directory of the rootfs is mounted. The processor 111 in the node 110M may send the rootfs to the remote storage device 120A, and store the rootfs in the file system A. A manner in which the processor 111 in the node 110M writes the data to the file system A to which the directory of the rootfs is mounted is similar to a manner in which the processor 111 in the node 110M writes the image file to the file system A to which the directory of the image is mounted. Details are not described herein again.

When detecting an action that the application needs to write data to the directory of the PVC, the processor 111 in the node 110M writes the data to the file system A to which the directory of the PVC is mounted. The processor 111 in the node 110M may send the data to the remote storage device 120A, and store the data in the file system A. A manner in which the processor 111 in the node 110M writes the data to the file system A to which the directory of the rootfs is mounted is similar to a manner in which the processor 111 in the node 110M writes the image file to the file system A to which the directory of the image is mounted. Details are not described herein again.

In the scenario in which the function of accessing the remote file system is offloaded to the acceleration apparatus 114, the acceleration apparatus 114 may replace the processor 111 in the node 110M to write data to the file system A to which the directory of the rootfs is mounted. A manner in which the acceleration apparatus 114 in the node 110M writes the data to the file system A to which the directory of the rootfs is mounted is similar to a manner in which the processor 111 in the node 110M writes the data in the file system A to which the directory of the rootfs is mounted, and a difference lies in different execution bodies. For details, refer to the foregoing descriptions. Details are not described herein again.

The acceleration apparatus 114 may replace the processor 111 in the node 110M to write data to the file system A to which the directory of the PVC is mounted. A manner in which the acceleration apparatus 114 in the node 110M writes the data to the file system C to which the directory of the PVC is mounted is similar to a manner in which the processor 111 in the node 110 writes the data to the file system C to which the directory of the PVC, and a difference lies in different execution bodies. For details, refer to the foregoing descriptions. Details are not described herein again.

Correspondingly, when the application needs to invoke data in the directory of the rootfs, the processor 111 or the acceleration apparatus 114 in the node 110M may also obtain the data from the file system A to which the directory of the rootfs is mounted, and load the data to the node 110M for application invocation. That the acceleration apparatus 114 performs the operation is applicable to a scenario in which the function of accessing the remote file system is offloaded to the acceleration apparatus 114.

When the application needs to invoke data in the directory of the PVC, the processor 111 or the acceleration apparatus 114 in the node 110M may also obtain the data from the file system C to which the directory of the PVC is mounted, and load the data to the node 110M for application invocation. That the acceleration apparatus 114 performs the operation is applicable to a scenario in which the function of accessing the remote file system is offloaded to the acceleration apparatus 114.

When a container is running, a user can perform some operations in the container, such as modifying and saving data. The user can store some data, as data in the rootfs, in the directory of the rootfs or store some data, as data in the PVC, in the directory of the PVC according to requirements of the user.

When detecting an operation that the user needs to write data to the directory of the PVC, the processor 111 in the node 110M writes the data to the file system C to which the directory of the PVC is mounted. The processor 111 in the node 110M may send the data to the remote storage device 120C, and store the data in the file system C. A manner in which the processor 111 in the node 110M writes the data to the file system C to which the directory of the PVC is mounted is similar to a manner in which the processor 111 in the node 110M writes the image file to the file system B to which the directory of the image file is mounted. Details are not described herein again.

In the scenario in which the function of accessing the remote file system is offloaded to the acceleration apparatus 114, the acceleration apparatus 114 in the node 110M may replace the processor 111 in the node 110M to write data to the file system C to which the directory of the PVC is mounted. A manner in which the acceleration apparatus 114 in the node 110M writes the data to the file system C to which the directory of the PVC is mounted is similar to a manner in which the processor 111 in the node 110M writes the data to the file system C to which the directory of the PVC is mounted, and a difference lies in different execution bodies.

Step 307: After creating the container, the node 110N writes data such as temporary data in a container running process to the directory of the rootfs, and writes data that needs to be persisted and that is generated in the container running process to the directory of the PCV file. A manner in which the node 110N performs step 307 is similar to a manner in which the node 110M performs step 306. For details, refer to the foregoing descriptions. Details are not described herein again.

Based on a same inventive concept as the method embodiment, an embodiment of this application further provides a container creation apparatus. The container creation apparatus is configured to perform the method performed by the node 110N in the method embodiment shown in FIG. 3. For related features, refer to the foregoing method embodiment. Details are not described herein again. As shown in FIG. 6, the container creation apparatus 600 includes a first mounting module 601, a first obtaining module 602, and a first creation module 603.

The first mounting module 601 is configured to mount a directory of an image file of a container to a first file system on a remote storage device.

The first obtaining module 602 is configured to obtain an image file from the first file system.

The first creation module 603 is configured to create a container on a first node based on the image file.

In a possible implementation, the first mounting module 601 may mount a directory of a root file of the container to a second file system on the remote storage device, and mount a directory of a persistent volume claim PVC of the container to a third file system on the remote storage device.

Based on a same inventive concept as the method embodiment, an embodiment of this application further provides another container creation apparatus. The container creation apparatus is configured to perform the method performed by the node 110M in the method embodiment shown in FIG. 3. For related features, refer to the foregoing method embodiment. Details are not described herein again. As shown in FIG. 7, the container creation apparatus 700 includes a second mounting module 701 and a second obtaining module 702, and optionally, further includes a second creation module 703.

The second mounting module 701 is configured to mount a directory of an image file of a container to a first file system.

The second obtaining module 702 is configured to: obtain the image file from an image repository, and store the image file in the first file system.

In a possible implementation, the second creation module 703 may obtain the image file from the first file system, and create the container on a second node based on the image file.

In a possible implementation, when storing the image file in the first file system, the second obtaining module 702 stores incremental data in the image file in the first file system, where the incremental data is data in terms of which the image file differs from another image file stored in the first file system.

In a possible implementation, when obtaining the image file from the image repository, the second obtaining module 702 obtains the incremental data in the image file from the image repository, where the incremental data is data in terms of which the image file differs from another image file stored in the first file system.

In a possible implementation, when obtaining the image file from the image repository, and storing the image file in the first file system, the second obtaining module 702 obtains the compressed image file from the image repository. The compressed image file is decompressed, and the image file obtained through decompression is stored in the first file system.

It should be noted that, in embodiments of this application, module division is an example, and is merely a logical function division. In actual implementation, another division manner may be used. Functional modules in embodiments of this application may be integrated into one processing module, or each of the modules may exist alone physically, or two or more modules are integrated into one module. The integrated module may be implemented in a form of hardware, or may be implemented in a form of a software functional module.

All or some of the foregoing embodiments may be implemented by software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this case, if the modifications and variations made to this application fall within the scope of the claims of this application and equivalent technologies thereof, this application is intended to cover these modifications and variations.

## Claims

1. A container creation method, wherein the method comprises:
mounting, by a first node, a directory of an image file of a container to a first file system on a remote storage device, wherein the remote storage device is a storage device independent of the first node;
obtaining, by the first node, the image file from the first file system; and
creating, by the first node, the container on the first node based on the image file.

2. The method according to claim 1, wherein the method further comprises:
mounting, by a second node, the directory of the image file to the first file system; and
obtaining, by the second node, the image file from an image repository, and storing the image file in the first file system.

3. The method according to claim 2, wherein the method further comprises:
obtaining, by the second node, the image file from the first file system, and creating the container on the second node based on the image file.

4. The method according to claim 2 or 3, wherein the storing, by the second node, the image file in the first file system comprises: storing, by the second node, incremental data in the image file in the first file system, wherein the incremental data is data in terms of which the image file differs from another image file stored in the first file system.

5. The method according to claim 2 or 3, wherein the obtaining, by the second node, the image file from an image repository comprises:
obtaining, by the second node, incremental data in the image file from the image repository, wherein the incremental data is data in terms of which the image file differs from another image file stored in the first file system.

6. The method according to any one of claims 2 to 5, wherein the first node and the second node are located in different data centers.

7. The method according to any one of claims 2 to 6, wherein the remote storage device and the first node are located in a same data center.

8. The method according to any one of claims 2 to 6, wherein the remote storage device and the first node are located in different data centers.

9. The method according to any one of claims 1 to 8, wherein the obtaining, by the first node, the image file from the first file system comprises:
obtaining, by a data processing unit DPU in the first node, the image file from the first file system.

10. The method according to any one of claims 1 to 9, wherein before the creating, by the first node, the container based on the image file, the method further comprises:
mounting, by the first node, a directory of a root file of the container to a second file system, wherein a device in which the second file system is located is a storage device independent of the first node; and
mounting, by the first node, a directory of a persistent volume claim PVC of the container to a third file system, wherein a device in which the third file system is located is a storage device independent of the first node.

11. The method according to claim 10, wherein the method further comprises:
accessing, by the DPU in the first node, the second file system and the third file system.

12. A container creation system, wherein the system comprises a first remote storage device and a first node, and the first remote storage device is a storage device independent of the first node;
the first remote storage device is configured to deploy a first file system; and
the first node is configured to mount a directory of an image file of a container to the first file system, obtain the image file from the first file system, and create the container on the first node based on the image file.

13. The system according to claim 12, wherein the system further comprises a second node and an image repository;
the image repository is configured to store the image file; and
the second node is configured to mount the directory of the image file to the first file system, obtain the image file from the image repository, and store the image file in the first file system.

14. The system according to claim 13, wherein the second node is further configured to:
obtain the image file from the first file system, and create the container on the second node based on the image file.

15. The system according to claim 13 or 14, wherein when storing the image file in the first file system, the second node is configured to:
store incremental data in the image file in the first file system, wherein the incremental data is data in terms of which the image file differs from another image file stored in the first file system.

16. The system according to claim 13 or 14, wherein when obtaining the image file from the image repository, the second node is configured to:
obtain incremental data in the image file from the image repository, wherein the incremental data is data in terms of which the image file differs from another image file stored in the first file system.

17. The system according to any one of claims 13 to 16, wherein the first node and the second node are located in different data centers.

18. The system according to any one of claims 12 to 17, wherein the first remote storage device and the first node are located in a same data center.

19. The system according to any one of claims 12 to 17, wherein the first remote storage device and the first node are located in different data centers.

20. The system according to any one of claims 12 to 19, wherein when obtaining the image file from the first file system, the first node is configured to:
obtain, by a data processing unit DPU in the first node, the image file from the first file system.

21. The system according to any one of claims 12 to 20, wherein the system further comprises a second remote storage device and a third remote storage device, and the second remote storage device and the third remote storage device are storage devices independent of the first node;
the second remote storage device is configured to deploy a second file system;
the third remote storage device is configured to deploy a third file system; and
the first node is further configured to:
mount a directory of a root file of the container to the second file system;
mount a directory of a persistent volume claim PVC of the container to the third file system.

22. The system according to claim 21, wherein the first node is further configured to:
access, by the DPU in the first node, the second file system and the third file system.

23. A container creation node, wherein the node comprises a processor and a memory, the memory is configured to store computer program instructions, and the processor is configured to perform the method according to any one of claims 1 to 11.

24. A computer-readable storage medium, wherein the computer-readable storage medium stores computer-executable instructions, and the computer-executable instructions are for enabling a computer to perform the method according to any one of claims 1 to 11.
